# EUROPEAN PATENT APPLICATION

(11) **EP 1 162 861 A2**
(43) Date of publication of application: **12.12.2001**
(21) Application number: 01440159.0
(22) Date of filing: 08.06.2001
(51) Int. Cl.: H04Q 11/00, H04L 12/56

(54) **Optical CDMA switch architecture and method**

(30) Priority: 08.06.2000 US 210434 P
(71) Applicant: ALCATEL, 75008 Paris (FR)
(72) Inventor: Ge, An, Plano, Texas 75025 (US); Tamil, Lakshman S., Plano, Texas 75093 (US)
(74) Representative: Wörz, Volker Alfred

(57) **Abstract**

A switch architecture and method for OCDMA packet switching within a network are disclosed. The switch architecture can comprise: at least one input channel for receiving an input signal, decoding the input signal into its component codes, wherein a data packet having a header and a payload is associated with each component code, converting each payload to an electronic format, and assigning an internal component code to each payload; an electronic mixer coupled to each input channel for receiving all of the electronic payloads and forwarding them as a combined electronic signal; a delay unit coupled to the electronic mixer, for delaying each electronic payload by a preset interval, and for selecting an output signal for routing each of electronic payload; at least one output channel for receiving the output signal, decoding the electronic payloads by their internal component codes, converting the electronic payloads to an optical format, assigning a new component code to each optical payload, and forwarding the optical payloads as an optical output signal; and a control unit for generating control signals to control payload routing through the switch architecture.

## Description

### TECHNICAL FIELD OF THE INVENTION

The present invention relates generally to optical network systems and methods and, more particularly, to optical switch architectures for network systems. Even more particularly, the present invention relates to a system and method for an optical code division multiple access (OCDMA) switch architecture.

### BACKGROUND OF THE INVENTION

Code division multiple access ("CDMA") has had limited applicability in optical network systems. Optical CDMA ("OCDMA") systems are primarily used in the access area, as a means of providing users and their data a connection point to a network. These access connections, however, provide no switching capability - the data output from the access connection is exactly the data input into the connection.

Access OCDMA systems generally have code filters at connection points that permit filtering out the code(s) desired as output. In this way, selected data packets can be taken as output, while others are filtered out and ignored. The optical fibers between connection points are like data busses, permitting data to be extracted at connection points, but not allowing flexible and robust data exchanges between two or more fibers. OCDMA systems are thus excluded from use in the fast wave division multiplexing/time division multiplexing ("WDM"/"TDM") core network.

Electronic switching architectures employing CDMA are available. However, these electronic CDMA architectures cannot easily be migrated to optical networks. Furthermore, electronic switching architectures will become difficult, if not impossible, to scale to meet the ever-increasing volume in data traffic over current network systems. Similarly, optical data packet switching architectures exist that can overcome some of the difficulties in electronic switching architectures. However, these optical switching architectures do not take advantage of the additional data packet capacity provided by CDMA.

To avoid conflict among data packets, and the consequent loss and/or corruption of data, and to increase data packet carrying capacity, current optical switching architectures send data packets along optical fibers at different times, or at different frequencies (colors). Data packets having different frequencies can be sent at the same time. Conversely, data packets having the same frequency must be sent at different times. However, this type of architecture fails to take advantage of the additional dimension provided by CDMA, which can permit assigning codes to data packets that are functionally similar to frequencies.

Using CDMA, data packets having the same frequency could be sent along a fiber at the same time if they are each assigned a different code. These codes are orthogonal, meaning that, like frequencies, each code is different and can be separated out using an appropriate filter. A switch architecture, and in particular an optical switch architecture, using CDMA, along with time and frequency, to differentiate data packets, could thus more easily avoid conflicts and greatly increase routing flexibility and network robustness. Such an OCDMA switch architecture could be used in the core network area and could provide broadcast and multicast functionality at the switch level.

### SUMMARY OF THE INVENTION

Therefore, a need exists for an OCDMA switch architecture and method that can be used to route data packet payloads within a core network.

A further need exists for an OCDMA switch architecture and method that takes advantage of the additional data packet carrying capacity provided by the CDMA protocol and its use of codes to prevent conflicts.

An even further need exists for an OCDMA switch architecture and method that can increase the flexibility and robustness of current OCDMA architectures, such that routing of data packets can be effectively implemented by reducing or avoiding data packet conflicts and the resulting loss and/or corruption of data.

A still further need exits for an OCDMA switch architecture and method that can provide broadcast and multicast functionality at the switch level.

In accordance with the present invention, an OCDMA switch architecture and method are provided that substantially eliminate or reduce the disadvantages and problems associated with previously developed systems and methods for OCDMA transmission of data packets across a network.

More specifically, the present invention provides a switch architecture and method for optical code division multiple access (OCDMA) packet switching within a network. One embodiment of the switch architecture of this invention comprises: at least one input fiber for receiving an input signal; an input decoder coupled to each input fiber for decoding each input signal into one or more component codes, wherein a data packet having a header and a payload is associated with each component code; an input encoder for each component code, coupled to the input decoder, for receiving the payload associated with a component code, converting the payload to an electronic format, and assigning an internal component code to the payload; an electronic mixer coupled to each encoder, for receiving all of the electronic format payloads and forwarding them as a combined electronic signal; a delay unit coupled to the electronic mixer, for delaying each electronic format payload by a preset interval, and for selecting an output channel for routing each electronic format payload; an output decoder for each output channel, for decoding the electronic format payloads by their internal component codes; a decoder select switch for each internal code, coupled to each output decoder, for selecting payloads for output; an output encoder, coupled to each decoder select switch, for receiving selected payloads, converting the payloads to an optical format, and assigning a new component code to the optical payloads; an optical mixer for each output channel, coupled to all output encoders for that channel, for receiving the optical payloads and forwarding them as an optical output signal; an output fiber coupled to each optical mixer, for transmitting the optical output signal as an output from the switch architecture; and a control unit for generating control signals to control payload routing through the switch architecture.

The present invention provides an important technical advantage of an OCDMA switch architecture and method that can be used to route data packet payloads within a core network.

A further technical advantage of the OCDMA switch architecture and method of the present invention is that they take advantage of the additional data packet carrying capacity provided by the CDMA protocol and its use of codes to prevent conflicts among data packets.

A still further technical advantage of the OCDMA switch architecture and method of this invention is the ability to increase the flexibility and robustness of current OCDMA architectures, such that routing of data packets can be effectively implemented by reducing or avoiding data packet conflicts and the resulting loss and/or corruption of data.

Still another technical advantage of the OCDMA switch architecture and method of this invention is the ability to provide broadcast and multicast functionality at the switch level.

### BRIEF DESCRIPTION OF THE DRAWINGS

For a more complete understanding of the present invention and the advantages thereof, reference is now made to the following description taken in conjunction with the accompanying drawings in which like reference numerals indicate like features and wherein:
FIGURE 1 is a block diagram of one embodiment of the OCDMA switch architecture and method of this invention;
FIGURE 2 is a graphical representation of a shift register memory embodiment of buffer block 18 of FIGURE 1; and
FIGURE 3 is a close-up block diagram of the last stage of the embodiment of buffer block 18 of FIGURE 2, showing the output control logic.

### DETAILED DESCRIPTION OF THE INVENTION

Preferred embodiments of the present invention are illustrated in the FIGUREs, like numerals being used to refer to like and corresponding parts of the various drawings.

The system and method of the present invention provide for flexible and robust data packet switching within the core network using OCDMA. Further, this invention can provide broadcast and multicast functionality at the switch level. The switch architecture for an OCDMA packet switching network of this invention can comprise, in one embodiment: at least one input channel for receiving an input signal, decoding the input signal into one or more component codes, wherein a data packet having a header and a payload is associated with each component code, converting each payload to an electronic format, and assigning an internal code to each payload; an electronic mixer coupled to every input channel, for receiving all of the electronic payloads and forwarding the electronic payloads as a combined electronic signal; a buffer block coupled to the mixer, for delaying each electronic payload by a preset interval, and for selecting an output signal for routing each electronic payload; at least one output channel for receiving the selected output signal, decoding the electronic payloads within the output signal by their internal codes, converting the electronic payloads to an optical format, assigning a new component code to each optical payload, and forwarding the optical payloads as an optical output signal along the at least one output channel; and a control unit for processing the header information from each data packet to generate control signals to control payload routing through the switch architecture.

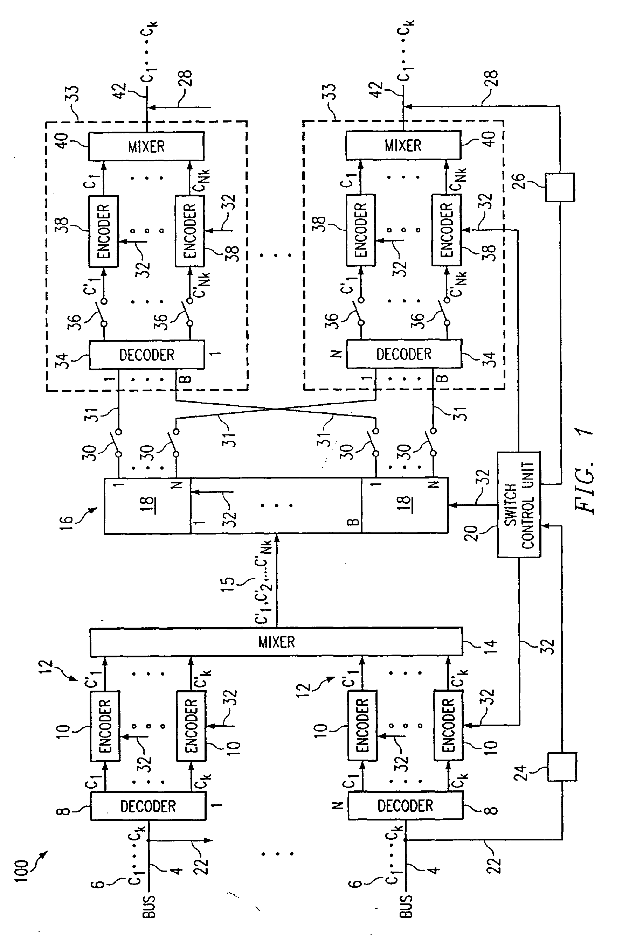

FIGURE 1 shows one embodiment of the OCDMA switch architecture and method of this invention. Switch 100 can have as inputs from 1 to N input fibers 4, where N is an arbitrary number whose value is determined by switch size and technology constraints, as discussed more fully below. Input fibers 4 can be WDM fibers. Each input fiber 4 is coupled to a data bus 2, and can carry input signals comprised of data packets having payload data bits and data packet header information bits. These data packets can be IP data packets. Header information 22 can be extracted from the data packets prior to input decoders 8, and processed electronically via control unit 20. The remainder of a data packet is routed through switch 100 and output from switch 100 on one of N output fibers 42, which can be WDM fibers. Each input fiber 4 can have up to k component codes 6, that are assigned to the data packets comprising the input fiber 4's input signal to differentiate the data packets and prevent conflicts that can result in data loss or corruption. The number of component codes k is an arbitrary number determined by the capacity of currently available switching technology.

The present invention provides the advantage of a third dimension on which to differentiate data packets. Like in current switching architectures, time and wavelength (frequency) differences between data packets can be used to increase the volume of data packets that can be carried on an optical fiber. The present invention also provides for assigning of different orthogonal component codes to data packets to further increase the ability to differentiate data packets to prevent conflict and to increase data capacity of optical fibers. The switch 100 architecture of this invention uses component codes 6 to route data packets to the different output fibers 42, and thus need not rely on the time or wavelength of incoming data packets as a basis for avoiding data packet conflict. Currently, k can be up to 32 codes for an optical fiber and up to 256 for an electrical fiber, but can be any number depending on the capacity of the switching and fiber technology. Switch 100 architecture of this invention can be scaled to support greater values of k.

FIGURE 1 illustrates the broadcast and select capability of this embodiment of the present invention. All of the data packet payloads coming into switch 100 are mixed together and forwarded through the switch architecture. Data packet output selection is performed at the switch 100 outputs. In this way, control information and routing is pushed to the switch outputs. At the switch inputs, the original data packet component codes 6 are determined and stored, data packets are assigned possibly different internal component codes 12, and the data packets are broadcast/multicast to the different outputs. Parallel output control can be implemented at the different outputs.

Control unit 20 can generate and provide control signals 32 to ensure the data packets are routed to the correct output. Control unit 20 performs this function by processing the data packet's header information to generate control signals 32. Control unit 20 can then continually update control signals 32 based on incoming header information. Optical-to-Electronic converters 24 are used to convert header information 22 from an optical to an electrical format for processing in control unit 20. The number of optical to electronic converters 24 can be from 1 to N, the number of input fibers 4.

Incoming data packet payloads along input fibers 4 arrive at input decoders 8, where the payloads are decoded from their input signal according to their component codes 6. Their can be up to N input decoders, one for every input fiber 4. Input decoders 8 act like demultiplexers, separating an input signal into individual data packet payloads by their component codes 6. This is possible because, at a given time, no two data packets along the same fiber can share the same component code 6. Two or more data packets on different input fibers 4 can, however, simultaneously have the same component code 6.

Input decoders 8 can each output up to k data packet payload signals, one to each of k input encoders 10. Input encoders 10 convert the payloads they receive from an optical format to an electronic format. Input encoders 10 also assign an internal component code 12 to each payload. The internal component code 12 assigned to each payload by input encoders 10 can be different than the payload's initial component code 6. Internal component codes 12 can be non-CDMA codes, such as other electronic protocol codes as known to those skilled in the art.

The outputs (payloads with newly encoded internal component codes 12) from every encoder coupled to every decoder are forwarded to electronic mixer 14. Electronic mixer 14 combines (mixes) together all k internal component codes 12 resulting from each of the N input fiber 4's input signals into a combined electronic signal 15. Electronic signal 15 can be comprised of data packet payloads encompassing all N*k internal component codes 12. Electronic mixer 14 forwards electronic signal 15 to delay unit 16.

Delay unit 16 is coupled to electronic mixer 14 and can be used to insert a delay increment into one or more of the payloads within electronic signal 15. Delay unit 16 can provide increasing levels of delay, with the first delay level being a zero delay. Each subsequent delay increment can be the average data packet length.

Delay unit 16 can be comprised of B buffer blocks 18, where the value of B is an arbitrary value determined by the performance requirements of switch 100. The smaller the desired data packet loss rate, the greater the number of buffer blocks 18 that are required. Buffer blocks 18 provide the delay increments for the data packet payloads. Buffer blocks 18 can be a simple shift register implementation, or can be a more complicated buffer technology as known to those skilled in the art.

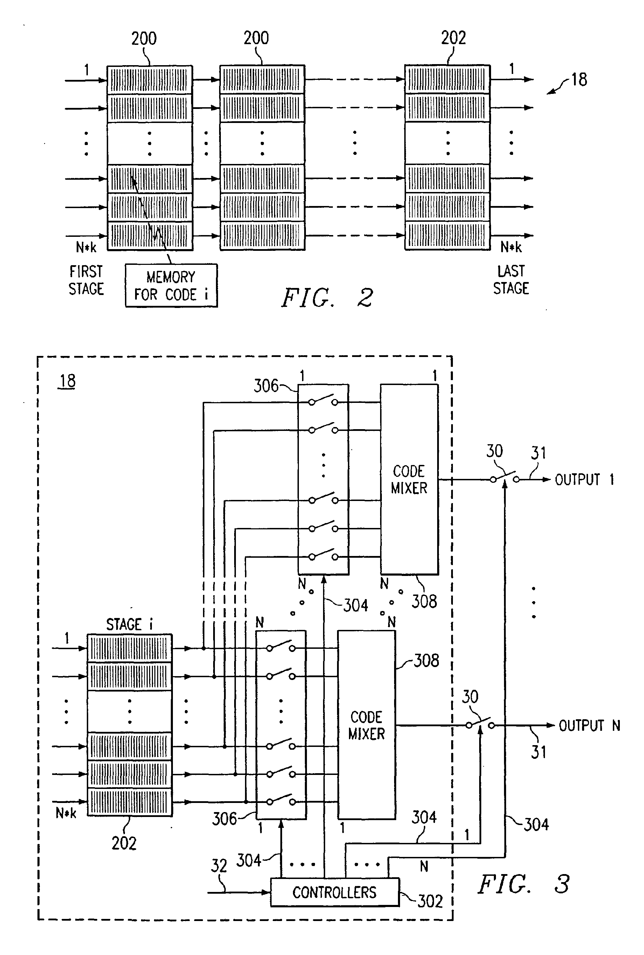

FIGURE 2 is a graphical representation of a shift register memory embodiment of buffer block 18 of FIGURE 1. Each buffer block 18 is comprised of one or more memory registers 200, including a last stage register 202. Like the number of buffer blocks 18, the number of registers 200 is arbitrary and can be determined by the performance requirements of switch 100. For electronic implementations, such as in this embodiment of this invention, the number of registers may typically be from 30-50. Each buffer block 18 can receive as inputs every one of the payloads comprising electronic signal 15. Each buffer block 18 can have a different number of registers 200, such that at the output of last stage register 202 of each buffer block 18, a different level of delay has been inserted into each of the possible N*k payloads coming into delay unit 16 along electronic signal 15.

Payloads from each of buffer blocks 18 can then be selected for output along any one of N output channels 33, shown in FIGURE 1. Switch 100 can thus provide for broadcast or multicast functionality at the switch level, as any (or no) combination of payloads can be sent to any output channel 33 from delay unit 16 from the same or different buffer blocks 18. The same payloads can be sent to one or more output channels 33, or different payloads (or no payloads) can be sent to different output channels 33. Each buffer block 18 can send the same payload to every output channel 33, or different (or no) payloads to each output channel 33, or any combination of same and different payloads to different output channels 33. Similarly, two buffer blocks 18 could send the same payload, with different levels of delay, to the same, or different, output channel 33.

FIGURE 3 is a close-up block diagram of last stage 202 of the shift register embodiment of buffer block 18 of FIGURE 2, showing the output control logic. As shown in FIGURE 2 and FIGURE 3, all N*k possible payloads associated with the N*k internal component codes 12 can be processed by each buffer block 18. From last stage 202, the payloads go to N sets of N*k register select switch 306. Register select switches 306 are used to select which payloads, if any, will be output along each of N buffer block outputs 31. Register select switches 306 are controlled, opened and closed, by control signals 304 from buffer controller 302. Buffer controller 302 receives control signal 32 from control unit 20 for generating control signals 304 from the data packet header information. Control signals 304 are also used by buffer controller 302 to control the operation of buffer select switches 30 of FIGURES 1 and 3. Buffer select switches 30 are used to select which of the N buffer block outputs 31 will be forwarded an output signal from buffer block 18. There can be up to N buffer select switches 30, one each for each buffer block output 31. Buffer blocks 18 can include buffer select switches 30.

The payloads selected using register select switches 306 are forwarded to code mixers 308, one each for each buffer block output 31. Code mixers 308 each receive the selected payloads from their respective set of register select switches 306. Code mixers 308 mix their respective selected payloads together into a combined output signal for possible selection and output along one of the N buffer block outputs 31, as discussed above.

Returning now to FIGURE 1, each signal selected for output along a buffer block output 31 from each buffer block 18 can be forwarded to a single output channel 33. Thus, each buffer block 18 can send a signal comprised of selected payloads to each of the N output channels 33. Each of these signal can be identical, or each can comprise different payloads, or some can be identical and some different. In this way, switch 100 can provide broadcast and multicast functionality at the switch level. Each input data packet payload can thus be output from any combination of output channels 33 of switch 100.

Output channels 33 each comprise an output decoder 34, N*k decoder select switches 36, N*k output encoders 38, an output mixer 40 and an output fiber 42. The operation of each output channel 33 is the same, and only one channel will be described as representative of all such output channels 33 shown in FIGURE 1.

Output decoder 34 can receive as inputs up to B selected signals, one each from each of the B buffer blocks 18. Output decoder 34 decodes the selected payloads from the selected signals according to their internal component codes 12. Output decoder 34 acts like a demultiplexer, separating a signal into individual data packet payloads by their internal component codes 6. Because all of the N*k possible input data packet payloads can be forwarded to each output decoder 34, output decoder 34 further comprises a processor 50 (not shown), that can control the opening and closing of decoder select switches 36. Decoder select switches 36 are used to select, based on header information, which, if any, internal component codes 12 (i.e., data packet payloads) to forward to output encoders 38 for output along output channel 33. Decoder select switches 36 can be electronic switches as known in the art.

Output encoders 38 can each receive payloads associated with an internal component code 12. Up to N*k payloads can be received at a given time at output encoders 38, one each for each of the N*k internal component codes 12. Each output encoder 38 converts the received payload back to an optical format and re-encodes the now optical payload with an optical component code 6. Output encoders 38 then forward their respective optical payloads to output mixer 40.

Output mixer 40 is an optical mixer. Output mixer 40 receives as inputs the outputs from every output encoder 38 for an output channel 33. Output mixer 40 combines the forwarded optical payloads from output encoders 38 into a single output signal and forwards the output signal comprised of the selected payloads for output from switch 100 along output fiber 42. The signals output along each of the N output fibers 42 can each be different signals, identical signals (i.e., have the same payloads), or any combination of different and identical signals. Switch 100 can thus provide broadcast and multicast functionality using CDMA. Switch 100 can, in effect, be a broadcast and select switch for an OCDMA network system.

The method and system of the present invention can provide increased switching flexibility and robustness. The use of OCDMA and electronic switching provides the ability to more easily avoid internal data packet conflicts. Because there can be N*k internal component codes 12, each of the optical component codes 6 can have more than one internal component code 12 to which it can be encoded. In this way, multiple data packets having the same component code 6 can be routed through switch 100 by being assigned a different internal component code 12. The data corruption and loss associated with data packet conflicts is thereby decreased over prior art systems and methods by reducing the possibility of conflicts occurring.

Even further, a data packet arriving as input to switch 100 need not have the same component code 6 assigned to it at the switch 100 output as it had coming into switch 100. The same packet could thus be output from switch 100 assigned to more than one component code 6. Two data packets arriving at switch 100 with the same component code 6 could thus be output from switch 100 along the same output fiber 42 at the same time without conflict. This could occur if at least one of the data packets is assigned a different component code 6 at the output than it had at the input to switch 100. The flexibility of this invention in avoiding data packet conflicts is thus increased, because conflicts can be avoided by inserting different delays at delay unit 16, and also by assigning different component codes 6 to data packets at the switch 100 output.

As previously discussed, header information is extracted from each data packet prior to arriving at input decoders 8. The header information is forwarded to control unit 20 through input optical-to-electrical converters 24. Control unit 20 can determine from the extracted header information what component codes 6 are being used within each input fiber 4. Control unit 20 can route data packet payloads based on their header information so that each of the data packets reaches its intended switch output without conflict or loss/corruption of data. If the possibility of conflict between payloads exists, control unit 20 can issue a control signal to route the data packets to avoid the potential conflict.

Extracted header information can be reassembled with its respective payload at the output of switch 100. Electrical-to-optical converters 26, at the output of control unit 20, can convert the header information back to an optical format to be reassembled with its associated payload. The optical header information 28 and its payload information can then be output along output fibers 42.

Although the present invention has been described in detail herein with reference to the illustrative embodiments, it should be understood that the description is by way of example only and is not to be construed in a limiting sense. It is to be further understood, therefore, that numerous changes in the details of the embodiments of this invention and additional embodiments of this invention will be apparent to, and may be made by, persons of ordinary skill in the art having reference to this description. It is contemplated that all such changes in additional embodiments are within the spirit and true scope of this invention as claimed below.

## Claims

1. A switch architecture for an optical code division multiple access (OCDMA) packet switching network, comprising:
at least one input channel for receiving an input signal, decoding said input signal into one or more component codes, wherein a data packet having a header and a payload is associated with each component code, converting each payload to an electronic format, and assigning an internal component code to each payload;
an electronic mixer coupled to said at least one input channel for receiving all of said electronic payloads and forwarding them as a combined electronic signal;
a delay unit coupled to said mixer, for delaying each of said electronic payloads by a preset interval, and for selecting an output signal for routing each of said electronic payloads;
at least one output channel for receiving said output signal, decoding said electronic payloads by their internal component codes, converting said electronic payloads to an optical format, assigning a new component code to each of said optical payloads, and forwarding said optical payloads as an optical output signal; and
a control unit for generating control signals to control payload routing through said switch architecture.

2. The switch architecture of Claim 1, wherein said at least one input channel further comprises:
an input fiber for receiving said input signal;
an input decoder for decoding said input signal into one or more component codes; and
an input encoder for each of said component codes, coupled to said input decoder for receiving said payload associated with said component code, converting said payload to an electronic format, and assigning an internal component code to said payload.

3. The switch architecture of Claim 2, wherein each input fiber can carry 32 component codes.

4. The switch architecture of Claim 1, wherein said at least one output channel further comprises:
a buffer block output for receiving said output signal;
an output decoder for decoding said electronic payloads by their internal codes;
a decoder select switch for each internal code, coupled to said output decoder, for selecting payloads for output;
an output encoder coupled to each decoder select switch, for receiving selected payloads, converting said payloads to an optical format, and assigning a new component code to said optical payloads;
an optical mixer, coupled to said output encoders, for receiving said optical payloads and forwarding said optical payloads as an optical output signal; and
an output fiber for transmitting said optical output signal as an output from said switch architecture.

5. The switch architecture of Claim 4, wherein said output decoder further comprises a processor for controlling the operation of said decoder select switches.

6. The switch architecture of Claim 1, wherein said delay unit further comprises at least one buffer block for inserting a delay increment into said data packet payloads.

7. The switch architecture of Claim 6, wherein said at least one buffer block is a shift register buffer block.

8. The switch architecture of Claim 7, wherein said shift register buffer block comprises one or more registers for inserting differing delay levels to said data packet payloads.

9. The switch architecture of Claim 8, wherein said one or more registers comprise from 30-50 registers.

10. The switch architecture of Claim 6, wherein each of said at least one buffer blocks further comprise:
a set of register select switches for each output channel for selecting payloads for output from said buffer block;
a code mixer coupled to each set of register select switches, for receiving said selected payloads, combining them into said output signal, and forwarding said output signal;
a buffer select switch coupled to each code mixer, for receiving said output signal and selecting said output signal for output to said at least one output channel; and
a buffer controller for generating control signals to control the operation of said set of register select switches and said buffer select switches.

11. The switch architecture of Claim 10, wherein said set of register select switches comprise a register select switch for each of said internal component codes.

12. The switch architecture of Claim 10, wherein said buffer controller generates control signals for controlling said set of register select switches and said buffer select switches based on said header information.

13. The switch architecture of Claim 6, wherein each of said buffer blocks inserts a multiple of a delay increment to said data packet payloads.

14. The switch architecture of Claim 13, wherein a first level of delay associated with a first buffer block is zero delay.

15. The switch architecture of Claim 13, wherein each additional buffer block inserts one more delay increment.

16. The switch architecture of Claim 13, wherein said delay increment is the average data packet length.

17. The switch architecture of Claim 1, wherein said input signal is an optical signal.

18. The switch architecture of Claim 1, wherein said switch architecture is a broadcast and select switch.

19. The switch architecture of Claim 1, wherein at least one of said output channels receives no signal.

20. The switch architecture of Claim 1, wherein said control unit generates said control signals based on the header information from said data packets.

21. The switch architecture of Claim 1, wherein said data packet payloads are routed through said switch architecture based on a desired output status.

22. The switch architecture of Claim 21, wherein said desired output status is an intended output fiber for each data packet.

23. The switch architecture of Claim 1, wherein said switch architecture is scalable to take advantage of improvements in optical fiber technology.

24. The switch architecture of Claim 1, wherein said switch architecture provides for broadcast and multicast capability at the switch level.

25. The switch architecture of Claim 1, wherein said control unit further comprises software instructions to control functionality of said control unit.

26. The switch architecture of Claim 1, wherein said header information is converted to an electronic format, for processing by said control unit, at one or more optical-to-electronic converters.

27. The switch architecture of Claim 26, wherein said header information is converted back to an optical format at one or more electronic-to-optical converters for recombining said header information with its respective payload.

28. The switch architecture of Claim 1, wherein one or more of said data packets are received at said switch architecture along a common one of said input channels and transmitted from said optical switch along a plurality of different output channels.

29. The switch architecture of Claim 1, wherein the number of said internal component codes equals the number of component codes multiplied by the number of input channels.

30. A switch architecture for an optical code division multiple access (OCDMA) packet switching network, comprising:
at least one input fiber for receiving an input signal;
an input decoder coupled to each of said input fibers, for decoding each input signal into one or more component codes, wherein a data packet having a header and a payload is associated with each component code;
an input encoder for each component code, coupled to said input decoder, for receiving said payload associated with said component code, converting said payload to an electronic format, and assigning an internal component code to said payload;
an electronic mixer coupled to each of said encoders for receiving all of said electronic payloads and forwarding said electronic payloads as a combined electronic signal;
a delay unit coupled to said electronic mixer, for delaying each of said electronic payloads by a preset interval, and for selecting an output channel for routing each electronic payload;
an output decoder for each output channel, for decoding said electronic payloads by their internal component codes;
a decoder select switch for each internal code, coupled to each output decoder, for selecting payloads for output;
an output encoder, coupled to each decoder select switch, for receiving selected payloads, converting said payloads to an optical format, and assigning a new component code to said optical payloads;
an optical mixer for each output channel, coupled to all output encoders for that channel, for receiving said optical payloads and forwarding said optical payloads as an optical output signal;
an output fiber coupled to each optical mixer, for transmitting said optical output signal as an output from said switch architecture; and
a control unit for generating control signals to control payload routing through said switch architecture.

31. The switch architecture of Claim 30, wherein each input fiber can carry 32 component codes.

32. The switch architecture of Claim 30, wherein said output channel further comprises a buffer block output for receiving said output signal.

33. The switch architecture of Claim 30, wherein said output decoder further comprises a processor for controlling the operation of said decoder select switches.

34. The switch architecture of Claim 30, wherein said delay unit further comprises at least one buffer block for inserting a delay increment into said data packet payloads.

35. The switch architecture of Claim 34, wherein said at least one buffer block is a shift register buffer block.

36. The switch architecture of Claim 35, wherein said shift register buffer block comprises one or more registers for inserting differing delay levels to said data packet payloads.

37. The switch architecture of Claim 36, wherein said one or more registers comprise from 30-50 registers.

38. The switch architecture of Claim 34, wherein each of said at least one buffer blocks further comprise:
a set of register select switches for each output channel for selecting payloads for output from said buffer block;
a code mixer coupled to each set of register select switches, for receiving said selected payloads, combining them into said output signal, and forwarding said output signal;
a buffer select switch coupled to each code mixer, for receiving said output signal and selecting said output signal for output to said at least one output channel; and
a buffer controller for generating control signals to control the operation of said set of register select switches and said buffer select switches.

39. The switch architecture of Claim 38, wherein said set of register select switches comprise a register select switch for each of said internal component codes.

40. The switch architecture of Claim 38, wherein said buffer controller generates control signals for controlling said set of register select switches and said buffer select switches based on said header information.

41. The switch architecture of Claim 34, wherein each of said buffer blocks inserts a multiple of a delay increment to said data packet payloads.

42. The switch architecture of Claim 41, wherein a first level of delay associated with a first buffer block is zero delay.

43. The switch architecture of Claim 41, wherein each additional buffer block inserts one more delay increment.

44. The switch architecture of Claim 41, wherein said delay increment is the average data packet length.

45. The switch architecture of Claim 30, wherein said input signal is an optical signal.

46. The switch architecture of Claim 30, wherein said switch architecture is a broadcast and select switch.

47. The switch architecture of Claim 30, wherein at least one of said output channels receives no signal.

48. The switch architecture of Claim 30, wherein said control unit generates said control signals based on the header information from said data packets.

49. The switch architecture of Claim 30, wherein said data packet payloads are routed through said switch architecture based on a desired output status.

50. The switch architecture of Claim 49, wherein said desired output status is an intended output fiber for each data packet.

51. The switch architecture of Claim 30, wherein said switch architecture is scalable to take advantage of improvements in optical fiber technology.

52. The switch architecture of Claim 30, wherein said switch architecture provides for broadcast and multicast capability at the switch level.

53. The switch architecture of Claim 30, wherein said control unit further comprises software instructions to control functionality of said control unit.

54. The switch architecture of Claim 30, wherein said header information is converted to an electronic format, for processing by said control unit, at one or more optical-to-electronic converters.

55. The switch architecture of Claim 54, wherein said header information is converted back to an optical format at one or more electronic-to-optical converters for recombining said header information with its respective payload.

56. The switch architecture of Claim 30, wherein one or more of said data packets are received at said switch architecture along a common one of said input fibers and transmitted from said optical switch along a plurality of different output fibers.

57. The switch architecture of Claim 30, wherein the number of said internal component codes equals the number of component codes multiplied by the number of input fibers.

58. An optical code division multiple access (OCDMA) packet switching method implemented using a switch architecture, comprising:
receiving an input signal along an input fiber;
decoding said input signal into one or more component codes, wherein a data packet having a header and a payload is associated with each component code, at an input decoder coupled to said input fiber;
at an input encoder for each component code, said input encoder coupled to said input decoder:
receiving said payload associated with said component code;
converting said payload to an electronic format; and
assigning an internal component code to said payload;
receiving all of said electronic payloads at an electronic mixer coupled to each of said encoders, and forwarding said electronic payloads as a combined electronic signal;
at a delay unit coupled to said electronic mixer:
delaying each of said electronic payloads by a preset interval; and
selecting an output channel for routing each electronic payload;
decoding said electronic payloads by their internal component codes, at an output decoder for each output channel;
selecting payloads for output at a decoder select switch for each internal code, said decoder select switches coupled to said output decoder;
at an output encoder coupled to each decoder select switch:
receiving selected payloads;
converting said payloads to an optical format; and
assigning a new component code to said optical payloads;
receiving said optical payloads at an optical mixer for each output channel, said optical mixer coupled to all output encoders for that channel, and forwarding said optical payloads as an optical output signal;
transmitting said optical output signal as an output from said switch architecture, at an output fiber coupled to each optical mixer; and
generating control signals to control payload routing through said switch architecture, at a control unit.

59. The method of Claim 58, wherein each input fiber can carry 32 component codes.

60. The method of Claim 58, wherein said output decoder further comprises a processor for controlling the operation of said decoder select switches.

61. The method of Claim 58, wherein said delay unit further comprises at least one buffer block for inserting a delay increment into said data packet payloads.

62. The method of Claim 61, wherein said at least one buffer block is a shift register buffer block.

63. The method of Claim 61, wherein each of said at least one buffer blocks further comprise:
a set of register select switches for each output channel for selecting payloads for output from said buffer block;
a code mixer coupled to each set of register select switches, for receiving said selected payloads, combining them into said output signal, and forwarding said output signal;
a buffer select switch coupled to each code mixer, for receiving said output signal and selecting said output signal for output to said at least one output channel; and
a buffer controller for generating control signals to control the operation of said set of register select switches and said buffer select switches.

64. The method of Claim 63, wherein said set of register select switches comprise a register select switch for each of said internal component codes.

65. The method of Claim 63, wherein said buffer controller generates control signals for controlling said set of register select switches and said buffer select switches based on said header information.

66. The method of Claim 61, wherein each of said buffer blocks inserts a multiple of a delay increment to said data packet payloads.

67. The method of Claim 66, wherein said delay increment is the average data packet length.

68. The method of Claim 58, wherein said input signal is an optical signal.

69. The method of Claim 58, wherein said switch architecture comprises a broadcast and select switch.

70. The method of Claim 58, wherein at least one of said output channels receives no signal.

71. The method of Claim 58, wherein said control unit generates said control signals based on the header information from said data packets.

72. The method of Claim 58, wherein said data packet payloads are routed through said switch architecture based on a desired output status.

73. The method of Claim 58, wherein said desired output status is an intended output fiber for each data packet.

74. The method of Claim 58, wherein said switch architecture is scalable to take advantage of improvements in optical fiber technology.

75. The method of Claim 58, wherein said switch architecture provides for broadcast and multicast capability at the switch level.

76. The method of Claim 58, further comprising the step of converting said header information to an electronic format, for processing by said control unit, at one or more optical-to-electronic converters.

77. The method of Claim 76, further comprising the step of converting said header information back to an optical format, at one or more electronic-to-optical converters, for recombining said header information with its respective payload.

78. The method of Claim 58, wherein one or more of said data packets are received at said switch architecture along a common one of said input fibers and transmitted from said optical switch along a plurality of different output fibers.

79. The method of Claim 58, wherein the number of said internal component codes equals the number of component codes multiplied by the number of input fibers.
